Europäisches Patentamt

European Patent Office

Office européen des brevets

(11) Veröffentlichungsnummer: **0 186 824**
**B1**

(12) # EUROPÄISCHE PATENTSCHRIFT

(45) Veröffentlichungstag der Patentschrift:
22.06.88

(51) Int. Cl.⁴: **G 03 B 17/30**

(21) Anmeldenummer: **85115781.8**

(22) Anmeldetag: **11.12.85**

(54) Spule für bandförmige Aufzeichnungsträger, insbesondere für fotografische Filme.

(30) Priorität: **22.12.84 DE 3447215**

(43) Veröffentlichungstag der Anmeldung:
**09.07.86 Patentblatt 86/28**

(45) Bekanntmachung des Hinweises auf die Patenterteilung:
**22.06.88 Patentblatt 88/25**

(84) Benannte Vertragsstaaten:
**BE CH DE FR GB IT LI**

(56) Entgegenhaltungen:
**EP - A - 0 077 972**
**DE - B - 1 058 363**
**US - A - 2 477 010**
**US - A - 3 361 380**

(73) Patentinhaber: **Agfa-Gevaert AG, Patentabteilung,
D-5090 Leverkusen 1 (DE)**

(72) Erfinder: **Hoffacker, Franz, Dipl.-Ing., Schumannweg 11,
D-4018 Langenfeld (DE)**
Erfinder: **Kovacic, Guido, Schulstrasse 7, D-5463 Unkel
(DE)**
Erfinder: **Lührig, Hermann, Dipl.-Ing.,
Heinrich-von-Kleist-Strasse 12,
D-5090 Leverkusen 1 (DE)**

## Beschreibung

Die Erfindung betrifft eine Spule für bandförmige Aufzeichnungsträger, insbesondere für fotografische Filme, mit einem im Spulenkern angeordneten Schlitz und darin vorgesehenen Mitteln zum Befestigen des in den Schlitz eingeschobenen Bandendes, wobei einschubseitig zwischen den axial verlaufenden oberen und unteren Schlitzflächen und den Aussenflächen des Spulenkernes annähernd zylindermantelförmig gerundete Übergangsflächen vorgesehen sind.

Eine derartige Spule ist aus der DE-B-1 058 363 bekannt. Bei der dort offenbarten Spule sind jedoch die an die Schlitzwände einschubseitig sich anschliessenden Übergangsflächen sehr stark gekrümmt und erstrecken sich im Querschnitt nur über einen Winkelbereich von ca. 90°. Zum Befestigen des Bandendes ist ein Haken vorgesehen, dessen Fuss in der Mittelebene des Spulenkerns liegt.

Noch geringer ist der Winkelbereich der Übergangsflächen bei der Ausführungsform nach der US-A-2 477 010, bei der noch zwischen den Übergangsflächen und den Aussenflächen des Spulenkerns Knicke in Kauf genommen werden.

Aus EP-A-0 077 972 ist eine Spule bekannt, bei der der Haken auf einem schwenkbaren Klemmkörper angeordnet ist, wodurch bei Zugbelastung des Filmstreifens dieser hinter dem in den Haken eingehängten Langloch festgeklemmt wird. Der Hakenfuss liegt in der Mittelebene des Spulenkernes.

Es hat sich gezeigt, dass Filme, die auf derartige Filmspulen aufgewickelt wurden, beim Wiederabwickeln höheren Zugbelastungen häufig nicht standhalten. Andererseits werden jedoch Filme, die nach dem bildmässigen Belichten durch den Benutzer zum Entwickeln und Kopieren in hierfür eingerichtete Verarbeitungsbetriebe gegeben werden, nach der maschinellen Entnahme des Filmwickels einschliesslich Spulenkern aus der Filmkassette in sogenannten Presplicer-Geräten maschinell abgespult und für die Zwecke der kontinuierlichen Durchlaufverarbeitung zu langen Bändern aneinandergeklebt, wobei jeweils der Anfang eines Filmes an das Ende eines voranlaufenden Filmes angeklebt wird. Zur Erzielung hoher Durchlaufgeschwindigkeiten und somit zum rationellen Einsatz des Maschinenparks des Verarbeitungsbetriebes erfolgt das Abspulen des Filmes von der Vorratsspule ebenfalls mit hoher Geschwindigkeit. Da das Filmende mit dem Spulenkern fest verhakt ist, kommt der Film beim Abspulen von der Spule am Ende des mit hoher Geschwindigkeit ablaufenden Abspulvorganges ruckartig zum Stillstand. Trotzdem soll jedoch hierbei das Filmende von der Spule nicht abreissen, da es für den nachfolgenden Klebevorgang im Presplicer-Gerät automatisch gefasst und nach maschinellem Abtrennen des unbelichteten, an der Spule haftenden Filmendteiles der Klebestation zugeführt werden soll, um mit dem Anfang des nächstfolgenden Filmes verbunden zu werden. Das ruckartige Anhalten des Filmlaufes am Ende des vorbeschriebenen Abspulvorganges führt zu ganz erheblichen dynamischen Zugbelastungen, denen der Film mit seinem an der Spule befestigten Endteil ausgesetzt ist. Ausserdem wird bei den vorbekannten Ausführungsformen der Film am Ende des Abspulvorganges in der Kamera und im Presplicer-Gerät auch statisch stark belastet, weil der Film dort an den einschubseitigen Flächen des Spulenschlitzes gar nicht zur Anlage oder allenfalls an einer Kante des Filmschlitzes zum Aufliegen kommt. Sofern der Film hierbei überhaupt eine Abstützung findet, ist sie lediglich auf eine Kantenberührung beschränkt.

Der vorliegenden Erfindung liegt die Aufgabe zugrunde, eine Filmspule zu schaffen, bei deren Verwendung der Film den vorgenannten dynamischen Zugbelastungen standhält und die statischen Haltekräfte erhöht werden. Dabei soll der Film nicht nur vor dem Ausreissen aus der spulenseitigen Befestigung bewahrt werden, sondern auch vor dem Abreissen im Endbereich des Filmes vor der Befestigungsstelle.

Diese Aufgabe wird durch die im Anspruch 1 enthaltenen Merkmale gelöst. Weitere Ausgestaltungen der vorliegenden Erfindung ergeben sich aus den Unteransprüchen.

Durch die erfindungsgemässe Ausbildung der Spule wird erreicht, dass der Film auch bei längerer Lagerung im aufgespulten Zustand in dem mit dem Spulenkern in Kontakt kommenden Endbereich keine durch extreme Krümmungen oder Knicke gekennzeichnete Formierung erhält, welche die dynamische Zugbelastung des Filmes in diesem Bereich herabsetzen würde. Dieser Vorteil kann mit der erfindungsgemässen Filmspule auch dann erreicht werden, wenn der Film vom Benutzer nach der bildmässigen Belichtung beim Rücktransport in die Filmkassette in einer der ursprünglichen Aufwickelrichtung entgegengesetzten Richtung wieder aufgewickelt wird. Während des maschinellen Abwickelns des Filmes im Verarbeitungsbetrieb wird der Film beim ruckartigen Beenden des Abwickelvorganges von der erfindungsgemäss ausgebildeten Filmspule in äusserst günstiger Weise abgestützt, so dass ein Abreissen des Filmendes trotz hoher Zugbelastung vermieden wird. Auch die statischen Haltekräfte werden verbessert, da der Film am Ende eines Abspulvorganges in der Kamera oder im Presplicer-Gerät auch beim Pendeln der Spule in eine Endlage eine flächenhafte Anlage an den Übergangsflächen des Spulenkernes erfährt.

Die erfindungsgemässe Spule ist nicht nur im Zusammenhang mit fotografischen Filmen vorteilhaft, sondern eignet sich auch für andere Aufzeichnungsträger, z.B. für Magnetbänder.

Ein Ausführungsbeispiel der Erfindung ist im folgenden anhand der beigefügten Zeichnungen näher beschrieben.

Es zeigen:

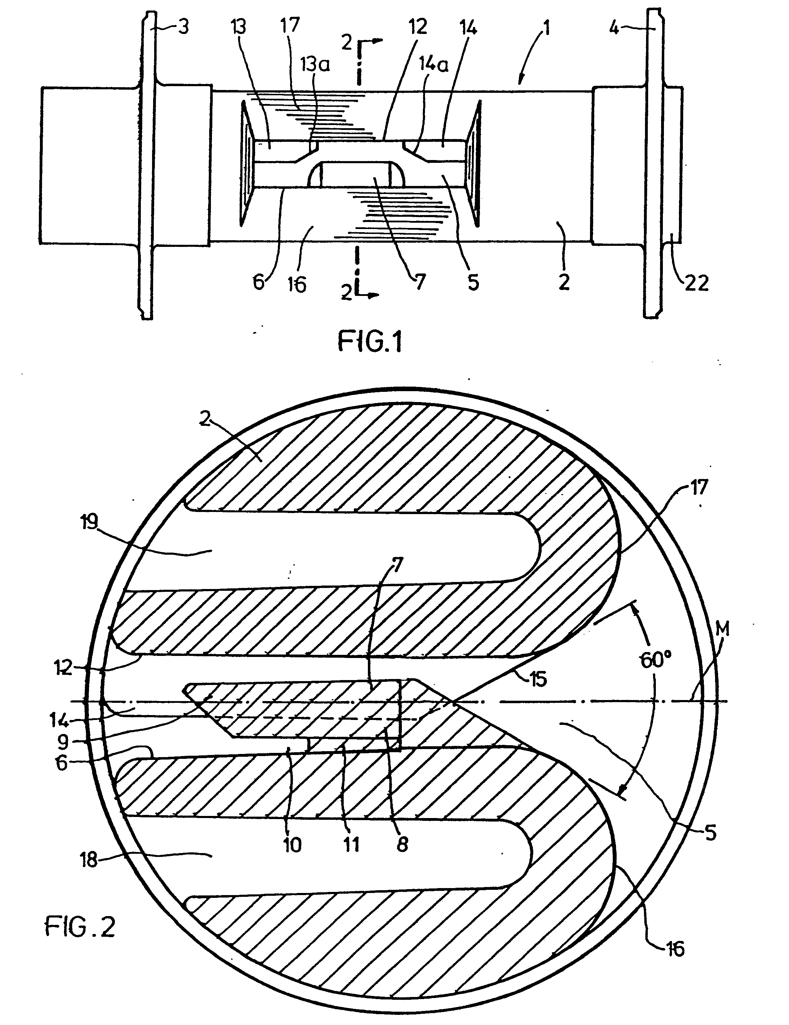

Fig. 1 eine erfindungsgemässe Filmspule in der Ansicht mit Blick auf die Filmeinschubseite

Fig. 2 den Gegenstand der Fig. 1 im Querschnitt längs der Linie 2–2 (ohne Flansche)

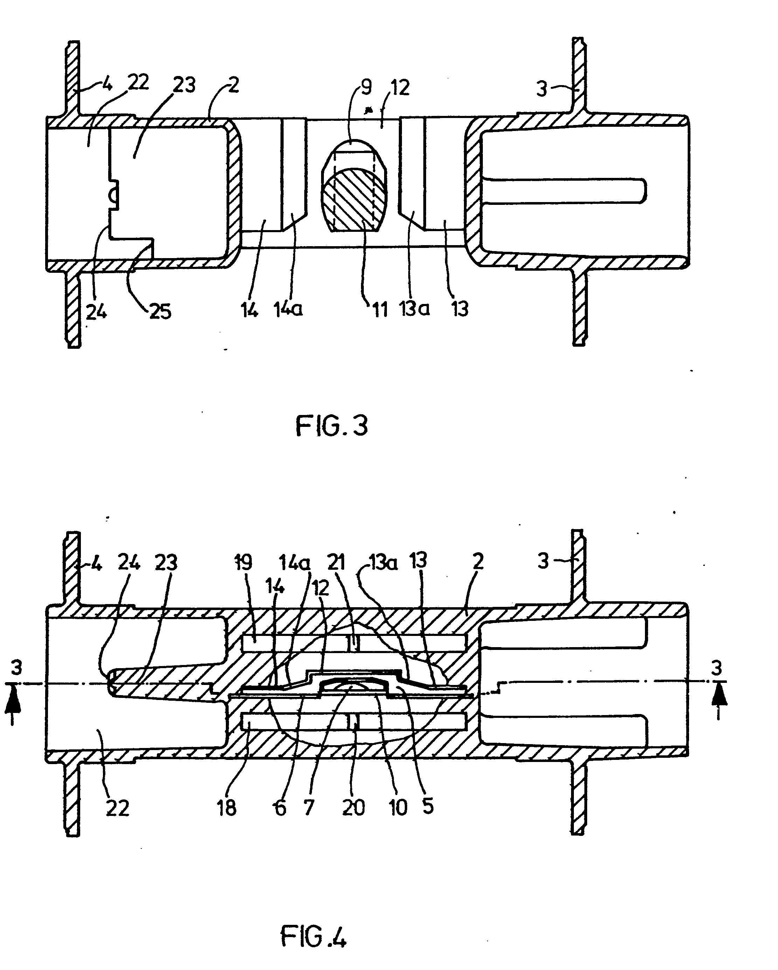

Fig. 3 die gleiche Filmspule im Längsschnitt längs der Linie 3–3 von Fig. 4

Fig. 4 den Gegenstand der Fig. 1 teils mit Schnitt, teils in der Ansicht mit Blick auf die der Filmeinschubseite entgegengesetzte Seite.

Die aus Kunststoff gespritzte Filmspule 1 besitzt einen im wesentlichen zylindrisch geformten Spulenkern 2 mit zwei seitlichen Flanschen 3 und 4.

Im Spulenkern 2 befindet sich ein durch die Kernmitte axial verlaufender Schlitz 5, der zum Einschieben und Befestigen des Endstückes eines nicht dargestellten fotografischen Rollfilmes, z.B. eines Kleinbildfilmes, dient, der nach der Befestigung auf die Filmspule aufgewickelt wird, wozu das Filmende in Fig. 2 von rechts her in den Spulenschlitz 5 eingeführt und nach der Befestigung des Filmes in diesem Schlitz die Filmspule 1 in der Darstellung in Fig. 2 entgegen dem Uhrzeigersinn gedreht wird.

An der unteren Wand 6 des Spulenschlitzes 5 ist der zur Filmbefestigung dienende Filmhaken 7 angespritzt, der einen Hakenschaft 8 und einen Hakenkopf 9 besitzt. Der Hakenschaft 8 besitzt auf der Seite des Filmeinschubes eine Rampe, an welcher das einzuschiebende Filmende bei der Einsetzbewegung aufgleiten kann, bis es nach Fortsetzung der Einschubbewegung mit einem als Langloch entsprechend ausgebildeten Befestigungsloch über den Haken 7 fällt und nach leichtem Zurückziehen des Filmes sich im Zwischenraum 10 zwischen dem Hakenkopf 9 und der Schlitzwand 6 verhakt. In an sich bekannter Weise ist der Hakenschaft 8 in seinem Fuss 11 der Form des Langloches des Filmes angepasst, so dass sich die Ränder des Filmes im Langloch an den Hakenfuss 11 satt anlegen können.

An der oberen Wand 12 des Schlitzes 5 sind zwei Niederhalter 13, 14 angespritzt, welche auf der Seite des Filmeinschubes ebenfalls Rampen 15 aufweisen, die zum Hakenkopf 9 hin angeschrägt sind (Flächen 13a, 14a). Die Niederhalter 13, 14 bewirken, dass die seitlichen Ränder des Filmendes beim Einschub in den Schlitz 5 nach unten gewölbt werden, wenn das Filmende in der Längsachse des Filmes beim Aufgleiten auf die Rampe des Filmhakens 7 nach oben gedrückt wird. Sobald der Film mit seinem Langloch in den Haken 7 eingefallen ist, wird er aufgrund seiner Eigensteifigkeit wieder plan. Der Niederhalter 13, 14 verhindern dann, dass der Film mit seinem Langloch aus dem Sperrhaken 7 sich wieder herausheben kann.

Die Rampe am Haken 7 sowie die Rampen 15 an den Niederhaltern 13, 14 erlauben ein müheloses Einschieben des Filmendes in den Schlitz 5, ohne dass der Film dabei gestaucht wird. Zu diesem Zweck sind die vorgenannten Rampen relativ flach ausgeführt. Sie schliessen einen Winkel von ca. 60° ein, der etwa symmetrisch zu der in Fig. 2 dargestellten Spulenmittelebene M liegt.

Aus Fig. 2 ist ferner ersichtlich, dass die zwischen Hakenkopf 9 und Schlitzwand 6 gelegene Ausnehmung 10, in der sich der Film verhakt, unterhalb der Spulenmittelebene angeordnet ist, d.h. auf der Seite, über welche bei der Konfektionierung die Aufwicklung erfolgt. Die Ausnehmung 10 übersteigt in ihrer lichten Weite die Filmdicke nur wenig.

Selbstverständlich können anstelle eines einzigen Filmhakens 7 auch mehrere nebeneinanderliegende Filmhaken vorgesehen werden, wenn das Filmende eine entsprechende Anzahl von Langlöchern aufweist.

An die Wände 6, 12 des Spulenschlitzes 5 schliessen sich Übergangsflächen 16, 17 an, die wiederum in die Aussenflächen des Spulenkerns 2 übergehen. Dabei bildet sich weder in Richtung zu den Schlitzflächen 6, 12 noch in Richtung zu den zylindrischen Aussenflächen des Spulenkerns 2 ein Knick. Die Übergangsflächen 16, 17 verstrecken sich im Querschnitt gemäss Fig. 2 jeweils über einen Winkelbereich von ca. 135° und bilden innerhalb dieses Bereiches Mantelflächen von Kreiszylindern mit einem Radius, der im Ausführungsbeispiel gemäss Fig. 2 etwa das 0,38-fache des Radius der zylindrischen Mantelfläche des Spulenkerns 2 beträgt.

Durch diese Ausgestaltung wird erreicht, dass die Übergangsflächen 16, 17 den grösstmöglichen Radius erhalten, ohne dass es im Anschluss an die Schlitzflächen 6, 12 oder im Anschluss an die Aussenkontur des Spulenkerns 2 zu mehr oder weniger scharf ausgeprägten Knicklinien oder starken Krümmungen kommt. Vielmehr ist die Krümmung im Übergang von den planen Schlitzwänden 6, 12 zu den zylindrischen Aussenflächen des Spulenkerns 2 nahezu gleichbleibend und so gering wie möglich.

Hierdurch wird erreicht, dass der Film beim Aufwickeln je nach der Drehrichtung der Spule 1 entweder an der Übergangsfläche 16 oder an der Übergangsfläche 17 satt anliegt und nur die minimale Krümmung annimmt, wie sie durch die Krümmung der Übergangsfläche 16 bzw. 17 vorgegeben ist. Vorzugsweise soll die Aufwicklung über die Übergangsfläche 16 erfolgen. Auch wenn der Film bei längerer Lagerung im aufgespulten Zustand diese vorgegebene Krümmung irreversibel annimmt, ist sie doch nicht so gross, dass während des maschinellen Abwickelns beim ruckartigen Anhalten des Filmes dessen Zugbelastbarkeit überbeansprucht wird. Hinzu kommt, dass bei diesem Vorgang aufgrund der Anordnung des Hakens 7 mit seiner wirksamen Ausnehmung 10 unterhalb der Spulenmittelebene die Filmspule am Ende des Abwickelvorganges unter der Wirkung des Filmzuges eine Winkelstellung erreicht, bei welcher der Film sich an die als Schulter dienende Übergangsfläche 16 flächenhaft anlegt.

Wie aus Fig. 2 und 4 ersichtlich ist, besitzt die Filmspule 1 aus Gründen der Materialersparnis sowie aus spritztechnischen Gründen zwischen dem Spulenschlitz 5 und den Aussenflächen des Spulenkerns 2 weitere Schlitze 18, 19, deren Öffnung nach aussen entgegengesetzt zur Filmeinschubseite liegt. Die Schlitze 18, 19 erstrecken sich ebenfalls parallel zur Mittelachse der Filmspule und sind in der Mitte durch Querstege 20, 21 unterteilt. Diese Querstege verhindern, dass bei der Lagerung und beim Transport der leeren Filmspulen als lose Schüttware vor der Konfektionierung Seitenflansche 3 bzw. 4 einer Spule sich in den Schlitzen 18 bzw. 19 anderer Spulen verhaken.

Aus der Seite des Spulenflansches 4 setzt sich der Spulenkern 2 in ein Nabenteil 22 fort, in welchem ein Mitnehmersteg 23 angeordnet ist. Dieser Steg kann zum Antrieb der Spule in der Kamera oder in Verarbeitungsgeräten von kamera- bzw. geräteseitigen Filmspulenschlüsseln erfasst werden, wodurch die Antriebsbewegung von der Kamera bzw. Konfektionierungs- oder Verarbeitungsmaschine auf die Filmspule übertragen wird.

Damit sich der kamera- bzw. maschinenseitige Antriebschlüssel vom Mitnehmersteg 23 wieder leicht ablösen kann, ist dieser im Längsschnitt trapezförmig ausgebildet, wie dies aus Fig. 4 ersichtlich ist. Die freie Kante 24 des Mitnehmersteges 23 besitzt als Kennung für die Winkelpositionierung der Spule eine Vertiefung 25, welche am einen Ende des Steges angeordnet ist. Durch diese aussermittige, in Bezug auf die Spulenachse unsymmetrische Anordnung kann bei entsprechend unsymmetrischem Antriebsschlüssel durch Abtasten der Kennung eine winkelgerechte Positionierung der Filmspule in der Kamera bzw. Konfektionierungs- oder Verarbeitungsmaschine erreicht werden. Dies ist beispielsweise dazu erforderlich, um zur Konfektionierung beim maschinellen Einschieben des Filmendes in den Spulenschlitz 5 der Filmspule 1 die einschubseitige Schlitzöffnung dem Filmtransportkanal der Konfektionierungsmaschine genau gegenüberzustellen.

## Patentansprüche

1. Spule (1) für bandförmige Aufzeichnungsträger, insbesondere für fotografische Filme, mit einem im Spulenkern (2) angeordneten Schlitz (5) und darin angeordneten Mitteln zum Befestigen des in den Schlitz (5) eingeschobenen Bandendes, wobei einschubseitig zwischen den axial verlaufenden oberen und unteren Schlitzflächen (6, 12) und den Aussenflächen des Spulenkerns (2) annähernd zylindermantelförmig gerundete Übergangsflächen (16, 17) vorgesehen sind, die zwischen den an sie angrenzenden Flächen des Spulenkernes (2) knickfrei angeordnet sind, dadurch gekennzeichnet, dass die Übergangsflächen (16, 17) im Querschnitt je einen Bogenabschnitt von mehr als 90° bilden, wobei dessen Radius mindestens ein Drittel des Radius des Spulenkernes (2) beträgt, und dass die Mittel zur Befestigung des Bandendes mindestens einen im Spulenschlitz (5) angeordneten Haken (7) umfassen, dessen Fuss (11) ausserhalb der Mittelebene (M) des Spulenkernes (2) durch den Schlitz auf der Seite liegt, über dessen Übergangsfläche (16) bei der Konfektionierung die Aufwicklung des Filmes erfolgt.

2. Spule nach Anspruch 1, dadurch gekennzeichnet, dass seitlich zu dem an einer Schlitzwand (6) angeordneten Haken (7) zwei an der gegenüberliegenden Schlitzwand (12) angeordnete Niederhalter (13, 14) angeordnet sind, die das Bandende nach der Befestigung am Haken (7) in der Befestigungslage niederhalten und zum Haken (7) hin angeschrägte Flächen (13a, 14a) aufweisen.

3. Spule nach Ansprüchen 1 und 2, dadurch gekennzeichnet, dass der Spulenkern (2) zwischen dem Schlitz (5) und den Aussenflächen in Bandeinschubrichtung rückseitig offene Ausnehmungen (18, 19) aufweist.

4. Spule nach Anspruch 3, dadurch gekennzeichnet, dass die Ausnehmungen (18, 19) schlitzförmig sind und parallel zur Längsachse des Spulenkerns (2) verlaufen.

5. Spule nach Anspruch 3, dadurch gekennzeichnet, dass die schlitzförmigen Ausnehmungen (18, 19) Querstege (20, 21) aufweisen.

6. Spule nach Ansprüchen 1 bis 5, dadurch gekennzeichnet, dass sie eine Nabe (22) mit einem darin angeordneten Mitnehmer aufweist, der zum Ansetzen eines Transportmittels für den Spulenantrieb dient und eine unsymmetrisch angeordnete, vom Transportmittel des Spulenantriebs abtastbare Kennung für eine winkelgerechte Positionierung der Spule (1) aufweist.

7. Spule nach Anspruch 6, dadurch gekennzeichnet, dass der Mitnehmer durch einen in der Spulennabe (22) angeordneten, quer zur Spulenachse verlaufenen Steg (23) gebildet ist, dessen Stirnkante (24) eine aussermittig angeordnete Ausnehmung (25) aufweist.

## Claims

1. Spool (1) for recording carriers in the form of tapes, in particular for photographic films, having a slot (5) arranged in the spool core (2) and means provided therein for fixing the end of the tape which has been pushed in to the slot (5), rounded transition surfaces (16, 17) approaching the form of cylindrical surfaces being provided between the axially extending upper and lower slot surfaces (6, 12) and the external surfaces of the spool core (2) on the side, where the film is inserted, which transition surfaces (16, 17) are arranged without angles or kinks between the adjacent surfaces of the spool core (2), characterised in that each of the transition surfaces (16, 17) forms an arc of more than 90° in cross section, the radius of which are amounts to at least one-third of the radius of the core (2) of the spool, and in that the means for fixing the end of the tape comprise at least one hook (7) arranged in the slot (5) of the spool, the foot (11) of which hook is situated outside of the mid-plane (M) of the spool core (2) through the slot on the side at which the film is wound over its transition surface (16) when the spool is being assembled.

2. Spool according to Claim 1, characterised in that two holding down devices (13, 14) are arranged on the slot wall (12) opposite to the slot wall (6) on which the hook (7) is arranged and laterally to said hook (7) which holding down devices (13, 14) hold the end of the tape down in its fixing position after it has been fixed on the hook (7), and said holding down devices (13, 14) have surfaces (13a, 14a) which are chamfered off on the side facing the hook (7).

3. Spool according to Claims 1 and 2, characterised in that the core (2) of the spool has recesses (18, 19) open to the back in the direction of insertion of the tape between the slot (5) and the external surfaces.

4. Spool according to Claim 3, characterised in that the recesses (18, 19) are in the form of slots and extend parallel to the longitudinal axis of the core (2) of the spool.

5. Spool according to Claim 3, characterised in that the recesses (18, 19) in the form of slots have transverse webs (20, 21).

6. Spool according to Claims 1 to 5, characterised in that is has a hub (22) with an entrainment element arranged therein which serves for the attachment of a transport means for driving the spool and has an asymmetrically arranged key notch which can be probed by the transport means of the spool drive to ensure correct angular positioning of the spool (1).

7. Spool according to Claim 6, characterised in that the entrainment means is formed by a web (23) arranged in the hub (22) of the spool and extending transversely to the spool axis, the end edge (24) of which web has an eccentrically arranged recess (25).

**Revendications**

1. Bobine (1) pour supports d'enregistrement en forme de bande, notamment pour films photographiques, comportant une fente (5) disposée dans le noyau (2) de la bobine et, à l'intérieur de la fente, des moyens de fixation de l'extrémité de bande introduite dans la fente (5), des surfaces de transition (16, 17) arrondies à peu près en forme d'enveloppe cylindrique, qui sont disposées sans être repliées entre les surfaces contiguës du noyau (2) de la bobine, étant prévues côté introduction, entre les surfaces de fente (6, 12) axiales, supérieure et inférieure, et les surfaces extérieures du noyau (2) de la bobine, caractérisée en ce que les surfaces de transition (16, 17) forment chacune en coupe transversale une section d'arc de plus de 90°, dont le rayon est au moins égal à un tiers du rayon du noyau (2) de la bobine et en ce que les moyens de fixation de l'extrémité de la bande comportent au moins un crochet (7) disposé dans la fente (5) et dont le pied (11) se situe sur le côté, à l'extérieur du plan médian (M) du noyau (2) de la bobine passant par la fente, l'enroulement du film s'effectuant sur la surface de transition (16) lors du conditionnement.

2. Bobine selon la revendication 1, caractérisée en ce que deux organes presseurs (13, 14) disposés sur la paroi de fente (12), sont placés sur le côté du crochet (7) disposé sur la paroi de fente (6) opposée, les organes presseurs (13, 14) maintenant l'extrémité de la bande en position de fixation, après fixation sur le crochet (7) et présentant des surfaces (13a, 14a) chanfreinées en direction du crochet (7).

3. Bobine selon les revendications 1 et 2, caractérisée en ce que le noyau (2) présente des évidements (18, 19) ouverts à l'arrière dans le sens d'introduction de la bande, entre la fente (5) et les surfaces extérieures.

4. Bobine selon la revendication 3, characté-risée en ce que les évidements (18, 19) ont la forme de fentes et sont parallèles à l'axe longitudinal du noyau (2) de la bobine.

5. Bobine selon la revendication 3, caractérisée en ce que les évidements (18, 19) en forme de fente comportent des barrettes transverales (20, 21).

6. Bobine selon les revendications 1 à 5, caractérisée en ce qu'elle comporte un moyeu (22) avec un entraîneur disposé à l'intérieur, qui sert à appliquer un moyen de transport pour l'entraînement de la bobine, ainsi qu'un repère disposé asymétriquement, pouvant être détecté par le moyen de transport du mécanisme d'entraînement de la bobine pour un positionnement angulaire exact de la bobine (1).

7. Bobine selon la revendication 6, caractérisée en ce que l'entraîneur est formé par une languette (23) disposée dans le moyeu de bobine (22) perpendiculairement à l'axe de la bobine, et dont le bord frontal (24) présente un évidement (25) excentré.

FIG.1

FIG.2

FIG. 3

FIG. 4